# EUROPEAN PATENT APPLICATION

(11) **EP 4 768 246 A1**
(43) Date of publication of application: **01.07.2026**
(21) Application number: 25837621.9
(22) Date of filing: 07.07.2025
(51) Int. Cl.: B32B 37/00, B32B 37/06, B32B 37/10, H01M 10/04

(54) **HEATING DEVICE AND LAMINATION FACILITY INCLUDING SAME**

(30) Priority: 08.07.2024 KR 20240089907
(71) Applicant: LG Energy Solution, Ltd., Seoul 07335 (KR)
(72) Inventor: PARK, Jong Pil, Daejeon 34122 (KR); LEE, Jun Hee, Daejeon 34122 (KR); LEE, Young Jae, Daejeon 34122 (KR); KWON, Dae Hyeoung, Daejeon 34122 (KR); LEE, Kang Min, Daejeon 34122 (KR)
(74) Representative: Goddar, Heinz J.
(86) International application number: PCT/KR2025/009753
(87) International publication number: WO 2026/014844

(57) **Abstract**

A heating device of the present invention includes: a heating unit spaced a set distance from a stack in which electrodes and separators are alternately disposed and configured to heat the stack through a heat source so as to define a first area having adhesive strength; and a cover unit configured to block a portion of the heat source of the heating unit directed toward the stack so as to define a second area having no adhesive strength to the stack or having adhesive strength less than that of the first area.

## Description

### TECHNICAL FIELD

### CROSS-REFERENCE TO RELATED APPLICATION

The present application claims the benefit of the priority of Korean Patent Application No. 10-2024-0089907, filed on July 8, 2024, which is hereby incorporated by reference in its entirety.

### TECHNICAL FIELD

The present invention relates to a heating device capable of increasing in electrolyte impregnation capacity and a lamination facility including the same.

### BACKGROUND ART

In general, secondary batteries refer to chargeable and dischargeable, unlike primary batteries that are not chargeable. The secondary batteries are being widely used for mobile phones, notebook computers, and camcorders, and the like.

The secondary batteries are classified into can-type secondary batteries in which an electrode assembly is built into a metal can, and pouch-type secondary batteries in which an electrode assembly is built into a pouch.

The can-type secondary battery includes an electrode assembly including one or more stacks, a can accommodating the electrode assembly, and a cap assembly mounted in an opening of the can. In addition, the pouch-type secondary battery includes an electrode assembly including one or more stacks, a pouch accommodating the electrode assembly, and an electrode lead connected to the electrode assembly and withdrawn from the pouch.

Each of the stacks may have a structure in which electrodes and separators are alternately disposed, and the electrodes may include a positive electrode and a negative electrode. That is, the stack has a structure in which the positive and negative electrodes are alternately disposed with the separator therebetween.

Here, the secondary battery undergoes a lamination process to increase in coupling strength of the stack, and the lamination process includes a heating process of heating the stack and a pressing process of pressing so that the stack adheres.

However, the lamination process according to the related art may increase in adhesive strength because the entire surfaces of the electrode and the separator adhere, but it has a problem that it takes a lot of time for electrolyte impregnation, and as a result, there is a problem that a defect rate increases as lithium precipitation occurs.

### DISCLOSURE OF THE INVENTION

### TECHNICAL PROBLEM

An object of the present invention is to provide a heating device, in which a heating area and a non-heating area are defined to pattern-bond a stack during lamination, that is, an adhesive area is provided on the stack through the heating area, and a non-adhesive area is provided on the stack through the non-heating area, and as a result, adhesive strength and electrolyte impregnation capacity are improved at the same time, and a lamination facility including the same.

### TECHNICAL SOLUTION

A heating device of the present invention may include: a heating unit spaced a set distance from a stack in which electrodes and separators are alternately disposed and configured to heat the stack through a heat source so as to define a first area having adhesive strength; and a cover unit configured to block a portion of the heat source of the heating unit directed toward the stack so as to define a second area having no adhesive strength to the stack or having adhesive strength less than that of the first area.

The heating unit may include: a heater configured to irradiate the heat source toward the stack; and a heating body to which the heater is fixed.

The cover unit may include: a cover part provided between the stack and the heating unit to block a portion of the heat source of the heating unit directed toward the stack; and a fixing part configured to connect the cover part to the heating body.

The cover part may be provided lengthily along a transfer direction of the stack, and the fixing part may be provided at each of both ends of the cover part, wherein the ends may be connected to the heating body.

The cover part may include a reflection plate configured to reflect the heat source of the heating unit so that the heat source is not irradiated to the stack.

The cover part may further include a heat-resistant plate provided on one surface of the reflection plate and having thermal conductivity and heat resistance.

The cover part may further include a blocking plate provided on an outer surface of the heat-resistant plate and having thermal conductivity.

The cover unit may be provided in at least two units to define two or more second areas on the stack.

The cover unit may further include a coupling unit coupled to be connected to the heating unit, wherein the coupling unit may include a horizontal adjustment member configured to allow the cover unit to be coupled to be movable in a horizontal direction perpendicular to a transfer direction of the stack.

The horizontal adjustment member may be disposed at a side of the heating body and have a horizontal guide hole to which the fixing part of the cover unit is connected to be movable in the horizontal direction.

The coupling unit may further include a vertical adjustment member configured to couple the horizontal adjustment member to the heating body, wherein the horizontal adjustment member may be coupled to be movable in a vertical direction toward the stack so as to adjust a distance between the stack and the cover unit.

A lamination facility of the present invention may include: the heating device; and a lamination device configured to press the stack passing through the heating device.

### ADVANTAGEOUS EFFECTS

The heating device of the present invention may be characterized by including the heating unit and the cover unit. Due to this characteristic, the first area having the adhesive strength and the second area having no adhesive strength or adhesive strength less than that of the first area may be provided on the stack, and thus, the adhesive strength may be improved through the first area of the stack, and the electrolyte impregnation capacity may be improved through the second area, and as a result, the adhesion and the electrolyte impregnation ability of the stack may be satisfied at the same time.

In the heating device of the present invention, the cover unit may be characterized by including the cover part that blocks a portion of the heat source of the heating unit; and the fixing part that connects the cover part to the heating body. Due to this characteristic, the heat source of the heating unit directed toward the stack may be effectively blocked, and as a result, the second area may be stably secured in the stack.

In the heating device of the present invention, the cover part may be characterized by including the reflection plate that reflects the heat source of the heating unit to block the heat source from being irradiated to the stack. Due to this characteristic, the heat source of the heating unit directed toward the stack may be effectively blocked.

In the heating device of the present invention, the cover part may be characterized by further including the heat-resistant plate having the high thermal conductivity and the high heat resistance and the blocking plate having the low thermal conductivity. Due to this characteristic, the stack may be effectively prevented from being heated by the heat source of the heating unit, and as a result, the generation of the adhesion to the second area may be effectively prevented.

In the heating device of the present invention, the cover unit may further include the coupling unit that connects the cover unit to the heating unit, and the coupling unit may be characterized in that the cover unit is coupled to be movable in the horizontal direction perpendicular to the transfer direction of the stack and the vertical direction toward the stack. Due to this feature, the position of the cover unit may be adjusted based on the stack, and as a result, the position of the second area provided on the stack may be adjusted.

### BRIEF DESCRIPTION OF THE DRAWINGS

FIG. 1 is a plan view of a stack according to the present invention.
FIG. 2 is an exploded perspective view of a heating device according to a first embodiment of the present invention.
FIG. 3 is an assembly perspective view of only the heating device according to the first embodiment of the present invention.
FIG. 4 is a front view of the heating device according to the first embodiment of the present invention.
FIG. 5 is a side view of the heating device according to the first embodiment of the present invention.
FIG. 6 is a cross-sectional view taken along line A-A of FIG. 5.
FIG. 7 is a cross-sectional view taken along line B-B of FIG. 5.
FIG. 8 is a cross-sectional view illustrating a first example of a cover part according to the first embodiment of the present invention.
FIG. 9 is a cross-sectional view illustrating a second example of the cover part according to the first embodiment of the present invention.
FIG. 10 is a side view illustrating a state of use of the heating device according to the first embodiment of the present invention.
FIG. 11 is a process diagram of a lamination facility according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Stack of the present invention]

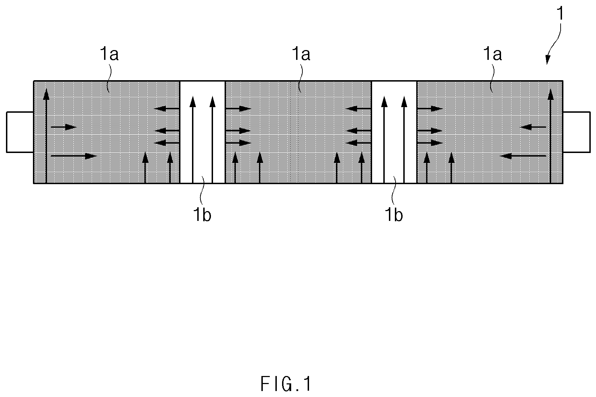

FIG. 1 is a plan view of a stack according to the present invention.

A stack 1 of the present invention has a structure including an electrode and a separator, as illustrated in FIG. 1. Here, the electrodes may be a positive electrode and a negative electrode.

As a first example, the stack 1 may be a stacked stack in which electrodes and separators are alternately stacked. As a second example, the stack 1 may be a jelly-roll type stack in which the electrodes are sequentially disposed through a separation sheet having a long sheet shape. In the present invention, a stacked stack in which electrodes and separators are alternately stacked is described as one embodiment.

The stack 1 includes a first area 1a having adhesive strength and a second area 1b having no adhesive strength or having adhesive strength less than that of the first area 1a.

Here, the first area 1a having the adhesive strength may be provided at each of both ends of the stack 1 to increase in adhesive strength between the electrode and the separator, which are provided at the ends of the stack 1.

The stack 1 of the present invention may increase in electrolyte impregnation capacity by providing the second area 1b. That is, as illustrated by an arrow in FIG. 1, the electrolyte impregnation capacity may greatly increase by impregnating an electrolyte through the outside of the stack 1 and the second area 1b provided on the stack 1.

To manufacture the stack 1 of the present invention having the above-described structure, a lamination process is performed, and particularly, a heating process of heating the stack 1 is first performed during the lamination process.

In addition, in the heating process, the stack 1 is heated using a heating device 10 according to a first embodiment of the present invention.

Particularly, the heating device 10 according to the first embodiment of the present invention may provide the first area 1b in which a portion of the stack 1 has adhesive strength, and the rest has no adhesive strength or has adhesive strength less than that of the first area 1a. Thus, the adhesive strength may increase through the first area 1a, and the electrolyte impregnation capacity may increase through the second area 1b. As a result, a working time may be significantly reduced.

Hereinafter, the heating device according to the first embodiment of the present invention will be described in detail with reference to the attached drawings.

### [Heating device according to first embodiment of the present invention]

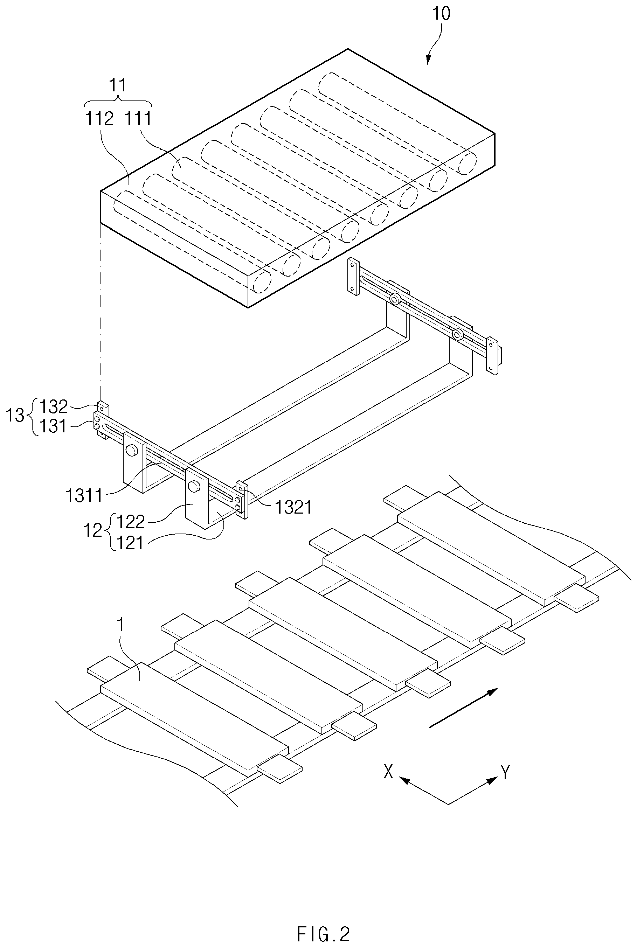

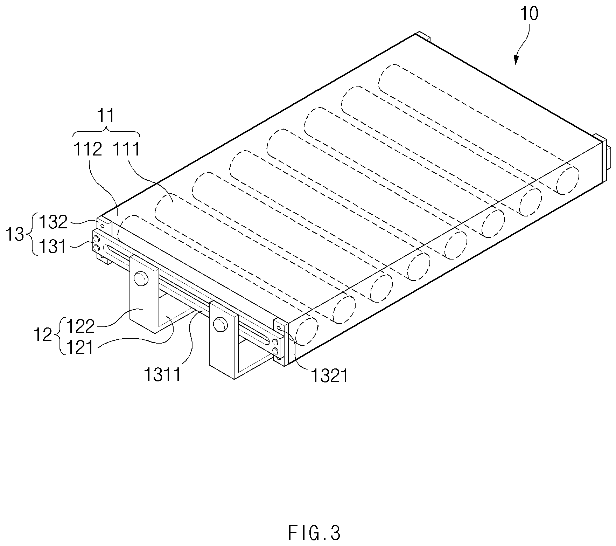

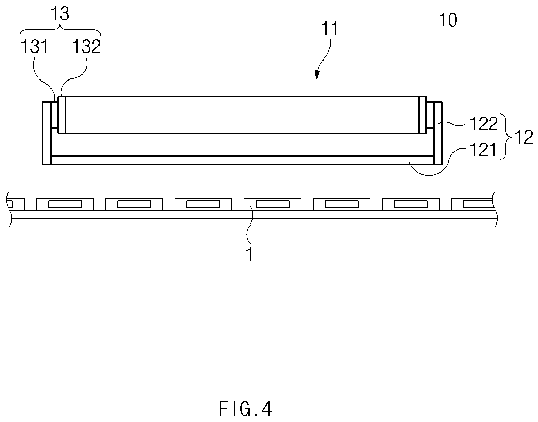

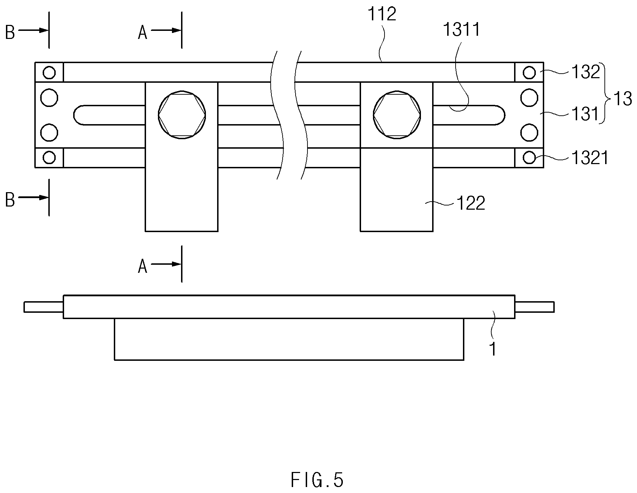

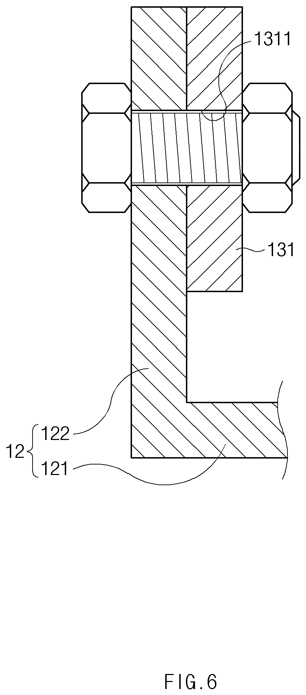

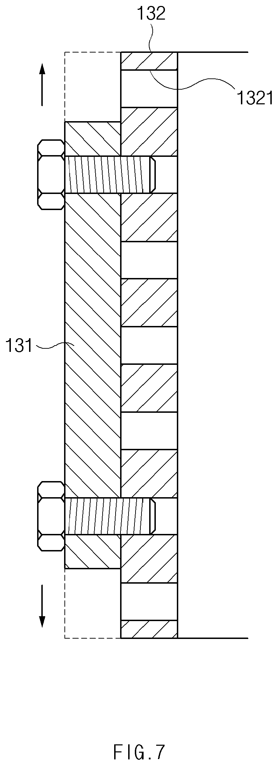

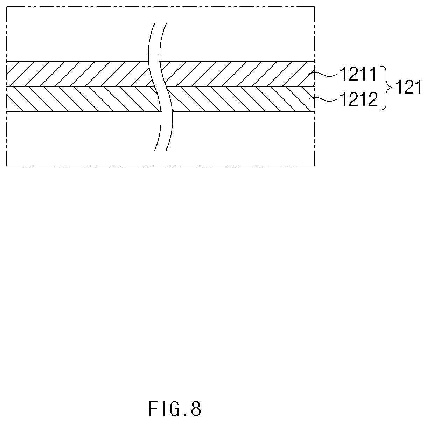

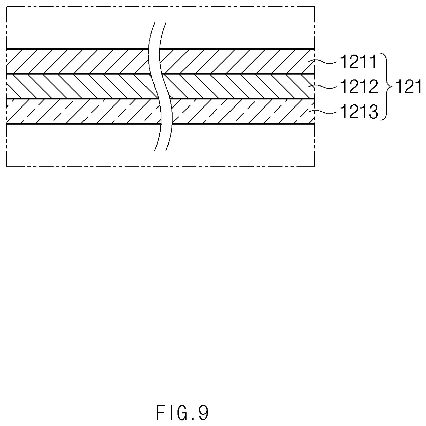

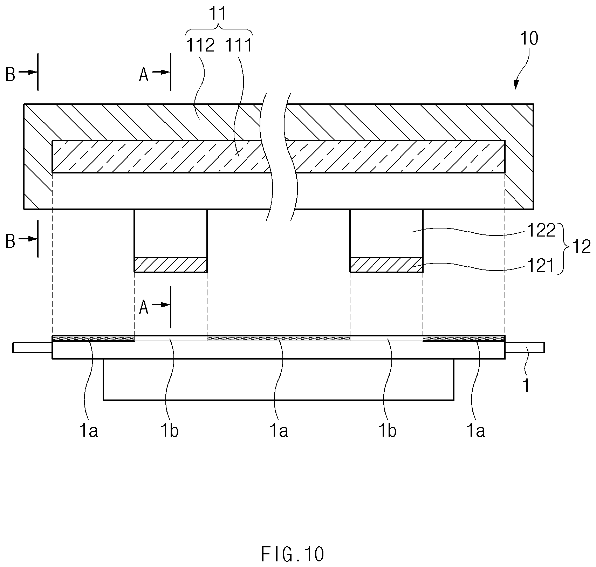

FIG. 2 is an exploded perspective view of a heating device according to a first embodiment of the present invention, FIG. 3 is an assembly perspective view of only the heating device according to the first embodiment of the present invention, FIG. 4 is a front view of the heating device according to the first embodiment of the present invention, FIG. 5 is a side view of the heating device according to the first embodiment of the present invention, FIG. 6 is a cross-sectional view taken along line A-A of FIG. 5, FIG. 7 is a cross-sectional view taken along line B-B of FIG. 5, FIG. 8 is a cross-sectional view illustrating a first example of a cover part according to the first embodiment of the present invention, FIG. 9 is a cross-sectional view illustrating a second example of the cover part according to the first embodiment of the present invention, and FIG. 10 is a side view illustrating a state of use of the heating device according to the first embodiment of the present invention.

The heating device 10 according to the first embodiment of the present invention includes a heating unit 11 and a cover unit 12, as illustrated in FIGS. 2 and 3.

### Heating unit

The heating unit 11 is configured to provide a first area 1a having adhesive strength on a stack 1.

That is, the heating unit 11 is spaced a set distance from the stack 1 and heats the stack 1 through a heat source to provide the first area 1a having the adhesive strength.

For example, the heating unit 11 includes a heater 111 that irradiates the heat source toward the stack 1, as illustrated in FIGS. 2 and 3; and a heating body 112 to which the heater 111 is fixed.

The heater 111 is configured to generate heat.

That is, the heater 111 is provided lengthily in a horizontal direction perpendicular to a transfer direction of the stack 1 to irradiate the heat source in a full-length direction of the stack 1. Particularly, the heater 111 may be provided in plurality, and the plurality of heaters 111 may be disposed in the transfer direction of the stack 1 to effectively heat the stack body 1. Referring to FIG. 2, the heater 111 is provided lengthily in an "X" direction of the stack 1, and the plurality of heaters are disposed in a "Y" direction.

The heater 111 may use an infrared radiation heater (IR heater). The IR heater may transfer heat through infrared rays, which is capable of effectively heating objects because of being directly absorbed into the object. Particularly, the IR heater provides a safe and efficient heat source, unlike harmful industrial heaters.

The heating body 112 is configured to fix the heater 111.

That is, the heating body 112 has an accommodation space defined in a bottom surface of the heating body 112 to accommodate the heater 111. Particularly, the plurality of heaters 111 are fixed in a state of being arranged at regular intervals in the accommodation space.

The heating unit 11 having such a structure irradiates the heat source to the stack 1 that is continuously transferred along the "Y" direction by the heater 111. Here, the first area 1a of the stack 1 irradiated with the heat source of the heater 111 is heated and has adhesive strength. In other words, the adhesive strength increases as the separator and the electrode of the stack 1 disposed on the first area 1a are heated.

Here, the features of increasing in adhesive strength when the separator and the electrode are heated were the known technology in the lamination process, and thus, detailed descriptions will be omitted.

### Cover unit

The cover unit 12 is configured to block a portion of the heat source of the heating unit 11 directed toward the stack 1 to provide the second area 1b having no adhesive strength or adhesive strength less than that of the first area 1a on the stack 1.

That is, the cover unit 12 may block a portion of the heat source of the heating unit 11 directed toward the stack 1 to provide the second area 1b on the stack 1.

For example, the cover unit 12 includes a cover part 121 that is provided between the stack 1 and the heating unit 11 to block a portion of the heat source of the heating unit 11 directed toward the stack 1; and a fixing part 122 that connects the cover part 121 to the heating body 112.

The cover part 121 is configured to block a portion of the heat source of the heating unit 11 directed toward the stack 1 to provide the second area 1b on the stack 1, and the fixing part 122 is configured to fix the cover part 121 to the heating unit 11.

The cover unit 12 having such a structure may provide the second area 1b in which the heat source of the heating unit 11 is not irradiated to the stack 1 by blocking a portion of the heat sources of the heating unit 11 through the cover part 121, and thus, the second area 1b has no adhesive strength or has adhesive strength less than that of the first area 1a. As a portion of the heat sources of the first area 1a is conducted to the second area 1b, the second area 1b may also have adhesive strength. However, since the second area 1b has a temperature lower than that of the first area 1a, the second area 1b has adhesive strength less than that of the first area 1a.

The cover part 121 may be provided lengthily along the transfer direction of the stack 1. That is, the cover part 121 may be provided lengthily in the 'Y' direction illustrated in FIG. 2. Thus, the second area 1b may be stably provided in the plurality of layers 1 being transferred.

The fixing part 122 may be provided at each of both ends of the cover part 121, and the ends may be connected to the heating body 112. That is, the cover unit including the cover part 121 and the fixing part 122 may have an approximate 'U' shape.

The cover part 121 has a stacked structure to effectively block the heat of the heating unit 11.

As a first example, the cover part 121 may include a reflection plate 1211 that reflects the heat source of the heating unit 11 to block the heat source from being irradiated to the stack 1, as illustrated in FIG. 8. The reflection plate 1211 may be made of a silver foil material with high reflectivity.

The cover part 121 further includes a heat-resistant plate 1212 to reinforce strength of the reflection plate 1211 and block the heat source of the heating unit 11 from passing through the reflection plate 1211. That is, the heat-resistant plate 1212 is provided on one surface of the reflection plate 1211 and is made of a material with high thermal conductivity and heat resistance. For example, the heat-resistant plate 1212 may be made of stainless steel. A temperature may be reduced by quickly spreading the heat source of the heating unit 11 throughout the entire heat-resistant plate 1212.

In summary, the cover part 121 has a structure in which the reflection plate 1211 and the heat-resistant plate 1212 are sequentially disposed in the direction toward the stack 1.

As a second example, the cover part 121 includes a blocking plate 1213 and a heat-resistant plate 1212, as illustrated in FIG. 9. Particularly, the blocking plate 1213 provided on an outer surface of the heat-resistant plate 1212 and having low thermal conductivity (i.e., lower thermal conductivity than the heat-resistant plate) may be further provided. The blocking plate 1213 completely blocks the heat source of the heating unit 11 from passing through the cover unit 12. For example, the blocking plate 1213 may be made of a synthetic resin material, preferably polypropylene.

In summary, the cover part 121 has a structure in which the reflection plate 1211, the heat-resistant plate 1212, and the blocking plate 1213 are sequentially disposed in the direction toward the stack 1.

The cover unit 12 may be provided in at least two units to provide two or more second areas 1b on the stack 1. For example, referring to FIG. 10, when two cover units 12 are installed on the heating unit 11, a first area 1a, a second area 1b, a first area 1a, a second area 1b, and a first area 1a may be defined on the stack 1. This increases in adhesive strength by providing three adhesive areas through three first areas 1a, and increases in electrolyte impregnation capacity by providing two non-adhesive areas through two second areas 1b.

Therefore, the heating device 10 according to the first embodiment of the present invention includes the heating unit 11 and the cover unit 12 to define the first area 1a having the adhesive strength to the stack 1 and the second area 1b having no adhesive strength or having adhesive strength lower than that of the first area 1a, thereby improving both the adhesive strength and the electrolyte impregnation capacity, and as a result, preventing defects due to lithium precipitation from occurring.

The heating device 10 according to the first embodiment of the present invention may further include a coupling unit 13 that connects the cover unit 12 to the heating unit 11.

### Coupling unit

The coupling unit 13 is configured to couple the cover unit 12 to the heating unit 11. Particularly, the coupling unit 13 includes a horizontal adjustment member 131 that allows the cover unit 12 to be positionally movable in the horizontal direction (the 'X' direction illustrated in FIG. 2) orthogonal to the transfer direction of the stack 1.

The horizontal adjustment member 131 is provided in pairs so as to be positioned on both sides of the heating body 112 (i.e., front and rear surfaces of the heating body 112 as illustrated in FIG. 2), and a guide hole 1311 to which the fixing part 122 of the cover unit 12 is coupled to be movable in the horizontal direction is defined.

That is, the cover unit 12 may move in the 'X' direction illustrated in FIG. 2 along the guide hole 1311 of the horizontal adjustment member 131. Thus, the position of the cover unit 12 may be adjusted based on the stack 1, and as a result, the position of the second area 1b to be defined on the stack 1 may be adjusted.

The cover unit 12 may fix the horizontal adjustment member 131 without moving through a fixing means. The fixing means may be a fixing bolt and a fixing nut. That is, the cover unit 12 may move and be fixed through the fixing bolt and the fixing nut.

The coupling unit 13 may further include a vertical adjustment member 132 that couples the horizontal adjustment member 131 to the heating body 112, and adjusts a distance between the stack 1 and the cover unit 12 while the horizontal adjustment member 131 is coupled to be movable in the vertical direction (upward and downward direction when viewed in FIG. 2) toward the stack 1.

That is, the vertical adjustment member 132 is provided on each of both sides of the heating body 112, and a plurality of bolt holes 1321 are defined in the vertical direction toward the stack 1. That is, the horizontal adjustment member 131 may adjust a height of the horizontal adjustment member 131 based on the vertical adjustment member 132 by being coupled to one of the plurality of bolt holes 1321, and thus, the height between the horizontal adjustment member and the stack 1 may also be adjusted.

Thus, the heating device 10 according to the first embodiment of the present invention may adjust the position of the cover unit 12 by including the coupling unit 13 and thus may adjust the position of the second area 1b defined on the stack 1, and also may adjust the distance between the stack 1 and the cover part.

Hereinafter, in describing other embodiments of the present invention, the same component symbols are used for components having similar functions as the foregoing embodiment, and thus, duplicated descriptions will be omitted.

### [Lamination facility according to second embodiment of the present invention]

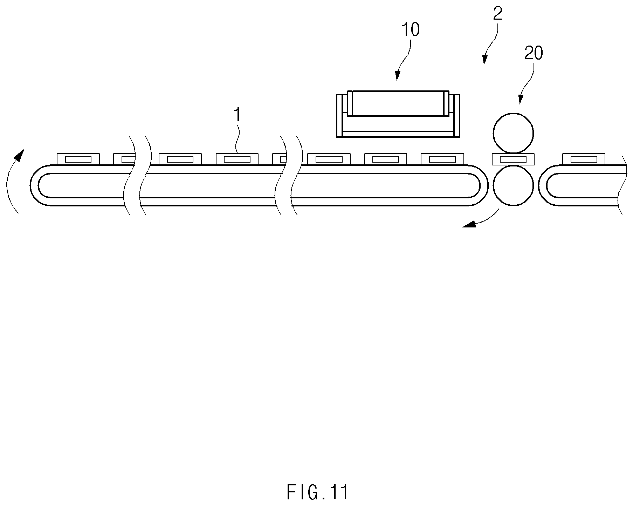

FIG. 11 is a process diagram of a lamination facility according to a second embodiment of the present invention.

A lamination facility 2 according to the second embodiment of the present invention includes a heating device 10 and a lamination device 20 that presses a stack 1 passing through the heating device 10.

Here, the heating device 10 is the same as the heating device 10 according to the foregoing first embodiment, and thus, duplicated descriptions will be omitted.

The lamination device 20 is provided with a pair of rolling rollers, and the pair of rolling rollers roll the stack 1 passing through the heating device 10. Here, the first area 1a defined on the stack 1 adheres by adhesive strength, and the second area 1b does not adhere or adheres with adhesive strength less than that of the first area 1a.

Thus, the lamination facility 2 according to the second embodiment of the present invention may manufacture the stack 1 that is capable of improving the adhesive strength through the first area 1a and improving electrolyte impregnation capacity through the second area 1b.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Stack
1a: First area
1b: Second area
2: Lamination facility
10: Heating device
11: Heating unit
111: Heater
112: Heating body
12: Cover unit
121: Cover part
1211: Reflection plate
1212: Heat-resistant plate
1213: Blocking plate
122: Fixing part
13: Coupling unit
131: Horizontal adjustment member
1311: Guide hole
132: Vertical adjustment member
1321: Bolt hole
20: Lamination device

## Claims

1. A heating device comprising:
a heating unit spaced a set distance from a stack in which electrodes and separators are alternately disposed and configured to heat the stack through a heat source so as to define a first area having adhesive strength; and
a cover unit configured to block a portion of the heat source of the heating unit directed toward the stack so as to define a second area having no adhesive strength to the stack or having adhesive strength less than that of the first area.

2. The heating device of claim 1, wherein the heating unit comprises:
a heater configured to irradiate the heat source toward the stack; and
a heating body to which the heater is fixed.

3. The heating device of claim 2, wherein the cover unit comprises:
a cover part provided between the stack and the heating unit to block a portion of the heat source of the heating unit directed toward the stack; and
a fixing part configured to connect the cover part to the heating body.

4. The heating device of claim 3, wherein the cover part is provided lengthily along a transfer direction of the stack, and
the fixing part is provided at each of both ends of the cover part, wherein the ends are connected to the heating body.

5. The heating device of claim 3, wherein the cover part comprises a reflection plate configured to reflect the heat source of the heating unit so that the heat source is not irradiated to the stack.

6. The heating device of claim 5, wherein the cover part further comprises a heat-resistant plate provided on one surface of the reflection plate and having thermal conductivity and heat resistance.

7. The heating device of claim 6, wherein the cover part further comprises a blocking plate provided on an outer surface of the heat-resistant plate and having thermal conductivity.

8. The heating device of claim 1, wherein the cover unit is provided in at least two units to define two or more second areas on the stack.

9. The heating device of claim 2, wherein the cover unit further comprises a coupling unit coupled to be connected to the heating unit,
wherein the coupling unit comprises a horizontal adjustment member configured to allow the cover unit to be coupled to be movable in a horizontal direction perpendicular to a transfer direction of the stack.

10. The heating device of claim 9, wherein the horizontal adjustment member is disposed at a side of the heating body and has a horizontal guide hole to which the fixing part of the cover unit is connected to be movable in the horizontal direction.

11. The heating device of claim 9, wherein the coupling unit further comprises a vertical adjustment member configured to couple the horizontal adjustment member to the heating body, wherein the horizontal adjustment member is coupled to be movable in a vertical direction toward the stack so as to adjust a distance between the stack and the cover unit.

12. A lamination facility comprising:
the heating device of claim 1; and
a lamination device configured to press the stack passing through the heating device.
